# EUROPÄISCHE PATENTSCHRIFT

(11) **EP 0 271 000 B1**
(45) Veröffentlichungstag und Bekanntmachung des Hinweises auf die Patenterteilung: **17.02.1993**
(21) Anmeldenummer: 87117870.3
(22) Anmeldetag: 03.12.1987
(51) Int. Cl.: G11B 7/24, G11B 7/26

(54) **Flächenförmiges laseroptisches Aufzeichnungsmaterial**
Flat material for optical laser recording
Matériau planiforme pour enregistrement optique par laser

(30) Priorität: 06.12.1986 DE 3641787
(43) Veröffentlichungstag der Anmeldung: 15.06.1988
(73) Patentinhaber: BASF Aktiengesellschaft, 67063 Ludwigshafen (DE)
(72) Erfinder: Naegele, Dieter, Dr., D-6520 Worms 1 (DE); Nissler, Harald, Dr., D-6710 Frankenthal (DE)

(56) Entgegenhaltungen:
- CHEMICAL ABSTRACTS, Band 105, Nr. 18, 3. November 1986, S. 634, Zusammenfassung Nr. 162338e, Columbus, Ohio, US
- CHEMICAL ABSTRACTS, Band 106, Nr. 22, 1. Juni 1987, S. 687, Zusammenfassung Nr. 186607p, Columbus, Ohio, US
- PATENT ABSTRACTS OF JAPAN, Band 10, Nr. 295 (M-523)(2351), 7. Oktober 1986
- SYNTHETIC METALS, Band 15, 1986, S. 219-227; M. Velasquez Rosenthal et al.: "Polypyrrole-Phthalocyanine"

## Beschreibung

Die Erfindung betrifft ein flächenförmiges, laseroptisches Aufzeichnungsmaterial mit
(A) einem elektrisch leitfähigen, dimensionsstabilen Träger und mit
(B) einer oder mit zwei einander gegenüberliegenden amorphen, elektrisch leitfähigen, thermisch veränderbaren Aufzeichnungsschicht(en) mit einem durch Elektrolyse herstellbaren kationischen Polymerisat als einer der wesentlichen Komponenten.

Hierbei bezieht sich der Begriff "flächenförmig" auf alle Raumformen, deren Dicke erheblich geringer ist als ihre Länge und Breite. Er umfaßt daher band-, platten- oder scheibenförmige Aufzeichnungsmaterialien, wobei man die scheibenförmigen auch als optische Datenplatten bezeichnet.

Der Begriff "amorph" gibt an, daß das Material der Aufzeichnungsschichten (B ) keine kristalinen Bereiche auf weist, welche größer sind als die thermisch veränderten Bereiche, sondern in diese Größenordnung physikalisch isotrop ist.

Die Bezeichnung "thermisch veränderbar" weist darauf hin, daß sich in den Aufzeichnungsschichten (B) durch die Bestrahlung mit einem auf sie fokussierten Schreiblaserstrahl in der Auftreffstelle Bereiche mit geänderten optischen Eigenschaften bilden. Bei diesen Bereichen kann es sich um Löcher, Krater oder um Flecke aus neuen Stoffmodifikationen handeln. Entstehen bei der Laserbestrahlung Löcher so spricht man allgemein von ablativer Aufzeichnung, bilden sich dabei Krater, so nennt man dies allgemein deformative Aufzeichnung, und bilden sich dabei neue Stoffmodifikationen, so wird dies auch als Aufzeichnung durch Phasenumwandlung bezeichnet.

Als "elektrisch leitfähig" werden hier nur solche Stoffe angesehen, welche eine Leitfähigkeit σ von mehr als 10⁻² S/cm aufweisen.

Flächenförmige, laseroptische Aufzeichnungsmaterialien mit Aufzeichnungsschichten, welche Farbstoffe und Polymerisate enthalten, sind aus der US-A-4 529 688, der EP-A-0 182 946 oder der EP-A-0 171 045 bekannt.

Die Aufzeichnungsschichten der US-A-4 529 688 enthalten Gemische aus Farbstoffen und Polymerisaten, welche chemisch nicht mit einander verbunden sind.

In den Aufzeichnungsschichten der EP-A-0 182 946 können die Farbstoffe als Bestandteile der Hauptkette von Polymerisaten vorliegen. Sie sind demnach mit Polymerisaten kovalent verbunden.

Dagegen enthalten die Aufzeichnungsschichten der EP-A-0 171 045 die Farbstoffe als kovalent gebundene Seitengruppen von Polymerisaten.

Darüber hinaus sind aus der EP-A-198 140 Aufzeichnungsschichten bekannt, deren Metalle enthaltende Farbstoffe über die Metalle mit den Polymerisaten verknüpft sind.

Aufzeichnungsschichten dieser Art werden im allgemeinen durch Auftragen von Lösungen der Schichtkomponenten auf Trägern und Abdampfen der Lösungsmittel (Naßbeschichtung) hergestellt und sind nicht elektrisch leitfähig.

Von Nachteil ist hierbei, daß die jeweils verwendeten Farbstoffe im festen Zustand nur eine begrenzte Löslichkeit in oder Verträglichkeit mit den Polymerisaten aufweisen, so daß sie, insbesondere bei den hohen Konzentrationen, wie sie für die laseroptischen Aufzeichnungsschichten notwendig sind, sehr leicht auskristallisieren, wodurch die Schichten inhomogen werden und sich nicht länger für eine Datenaufzeichnung eignen.

Diesem Nachteil kann man begegnen, indem man die Farbstoffe kovalent oder über Metalle mit den Polymerisaten verbindet. Dabei können die Farbstoffe Bestandteil der Polymerisathauptkette sein oder als Seitengruppen vorliegen. In beiden Fällen sind Farbstoffe zu verwenden, welche nicht ohne weiteres erhältlich sind, sondern erst für den entsprechenden Anwendungszweck speziell synthetisiert und dann zu Polymerisaten weiterverarbeitet werden müssen, oder aber die Polymerisate sind nachträglich durch polymeranaloge Umsetzungen mit Farbstoffen zu modifizieren. All dies ist indes ebenfalls von Nachteil.

Unabhängig davon, von welcher Art eine bekannte Farbstoff-Polymerisat-Kombination ist, kann sie im allgemeinen nur durch Naßbeschichtung auf die Träger aufgebracht werden. Die Naßbeschichtung weist indes hinsichtlich der exakten Einstellung und Reproduzierbarkeit der Stärke der Aufzeichnungsschichten Nachteile auf. Insbesondere läßt sie kaum eine Korrektur der Verfahrensparameter während der Beschichtung zu. Die für die Naßbeschichtung notwendigen großen Lösungsmittelmengen werfen ökologische und verfahrenstechnische Probleme auf. Außerdem kann es beim Trocknen der Naßschichten zur Bildung von Löchern oder Rissen in den Schichten kommen, wodurch diese für die laseroptische Datenaufzeichnung unbrauchbar werden.

Was die Nachteile der Naßbeschichtung betrifft, lassen diese sich in gewissem Umfang durch die elektrolytische Abscheidung von amorphen, elektrisch leitfähigen, thermisch veränderbaren Aufzeichnungsschichten (B) auf elektrisch leitfähigen, dimensionsstabilen Trägern (A) umgehen.

So ist z. B. aus der JP-A-61 143 192 (Priorität JP 84 265 457 vom 18.12.84) ein flächenförmiges, laseroptisches Aufzeichnungsmaterial bekannt, dessen Aufzeichnungssschicht (B) elektrolytisch aus einer Lösung von Pyrrol, Thiophen, Furan, Indol oder Azulen in Wasser, Acetonitril oder Ethanol (= Elektrolyt) auf einem Träger (A) aus Au, Ni, Si oder Metalloxid wie Indiumoxid abgeschieden wird. Der Elektrolyt kann darüber hinaus Kaliumchlorid, Tetra-n-butylammoniumperchlorat und Farbstoffe enthalten.

Außerdem ist aus dem Vortrag von W. Gambogi, L. Traynor und E. Buhks, anläßlich der Optical Data Storage Conference in Lake Tahoe, 1987, U.S.A., Abstract No. FA5-1, "Conductive Polymers as Active Optical Storage Media", ein Aufzeichnungsmaterial bekannt, dessen Aufzeichnungsschicht (B) aus Polypyrrol auf einem Träger (A) aus Glas, welches mit einem elektrisch leitfähigen Oxid bedeckt ist, elektrolytisch abgeschieden wird.

Ferner ist es aus dem Artikel von M.V. Rosenthal, T.A. Skotheim und C.A. Linkous, "Polypyrrole-Phthalocyanine", in Synthetic Metals, Band 15, Seiten 219 bis 227, 1987, bekannt, Polypyrrol-Phthalocyaninschichten aus Elektrolyten, welche Pyrrol und Sulfonatgruppen tragende Phthalocyanine enthalten auf Platin- oder Indiumzinnoxidelektroden zu erzeugen. Ob diese Schichten als Aufzeichnungsschichten (B) in Frage kommen, läßt sich dem Artikel nicht entnehmen.

Die bekannten flächenförmigen, laseroptischen Aufzeichnungsmaterialien, deren Aufzeichnungsschichten (B) elektrolytisch erzeugt worden sind, können zwar in gewissem Umfang die Nachteile der Naßbeschichtung beheben, indessen handelt man sich hierbei neue Nachteile ein:

So kommen für die Herstellung der bekannten flächenförmigen, laseroptischen Aufzeichnungsmaterialien bislang lediglich die genannten Trägermaterialien in Betracht. Träger (A) dieser Art sind aber für die Verwendung in flächenförmigen, laseroptischen Aufzeichnungsmaterialien nur in beschränktem Maße brauchbar. Außerdem weisen die bekannten flächenförmigen, laseroptischen Aufzeichnungsmaterialien oftmals bei gleicher Zusammensetzung und Dicke der Aufzeichnungsschicht (B) ein stark variierendes Signal-Rausch-Verhältnis auf. Überdies ist häufig und in nicht vorhersagbarer Weise das Wiederauffinden der eingeschriebenen Daten gestört, d. h., das sogenannte "tracking"-Verhalten der Aufzeichnungsmaterialien ist wenig befriedigend und für die Praxis, für welche ein rascher Zugriff zu den Daten essentiell ist, nicht ausreichend.

Der vorliegenden Erfindung liegt die Aufgabe zugrunde, neue, flächenförmige, laseroptische Aufzeichnungsmaterialien mit
(A) einem elektrisch leitfähigen, dimensionsstabilen Träger und mit
(B) einer oder mit zwei einander gegenüberliegenden amorphen, elektrisch leitfähigen, thermisch veränderbaren Aufzeichnungsschicht(en) mit einem durch Elektrolyse herstellbaren kationischen Polymerisat als einer der wesentlichen Komponenten
zu finden, welche die Nachteile des Standes der Technik nicht aufweisen. Darüber hinaus sollen die neuen Aufzeichnungsmaterialien sowohl im beschriebenen als auch im unbeschriebenen Zustand eine hohe Lagerstabilität aufweisen, so daß sich bei der Lagerung ihr Signal-Rausch-Verhältnis nicht verschlechtert und kein Informationsverlust eintritt. Außerdem sollen sie ein gutes "tracking"-Verhalten aufweisen.

Demgemäß wurde ein flächenförmiges, laseroptisches Aufzeichnungsmaterial mit
(A) einem elektrisch leitfähigen, dimensionsstabilen Träger und mit
(B) einer oder mit zwei einander gegenüberliegenden amorphen, elektrisch leitfähigen, thermisch veränderbaren Aufzeichnungsschicht(en) mit einem durch Elektrolyse herstellbaren kationischen Polymerisat als einer der wesentlichen Komponenten
gefunden,
welches dadurch gekennzeichnet ist, daß der elektrisch leitfähige, dimensionsstabile Träger (A),
(a₁) ein Band, eine quadratische oder rechteckige Platte oder eine runde Scheibe aus Kunststoff darstellt und
(a₂) in der Oberfläche, die einer Aufzeichnungsschicht (B) zugewandt ist, Strukturen aufweist, wobei
(a₃) diese Oberfläche zusätzlich mit einer 20 bis 100 mm dicken Schicht aus Ru, Rh, Pd, Ag, Re, Os, Ir, Pt, Au, Ni und/oder Cu bedeckt ist,
und daß die amorphe, elektrisch leitfähige, thermisch veränderbare Aufzeichnungsschicht (B) oder eine jede der beiden Aufzeichnungsschichten (B)
(b₁) 30 bis 95 Gew.%, bezogen auf (B), eines thermopolymerisats von Pyrrol, N-Alkylpyrrol, N-Arylpyrrol, Thiophen oder von Anilin, eines Copolymerisats von mindestens zwei dieser Monomeren oder eines Copolymerisats von mindestens einem dieser Monomeren mit Furan und/oder Thiazol und
(b₂) 5 bis 70 Gew.%, bezogen auf (B) mindestens eines anionischen Farbstoffs aus den Klassen der Azo-, der Perylen-, der Anthrachinon-, der Cyanin-, der Phthalocyanin-, der Porphin-, der Tetraazaperphin-, der Hemiporphyrazin oder der Tetrathiolato-Metallkomplex-Farbstoffe
enthält.

Der eine wesentliche Bestandteil des erfindungsgemäßen Aufzeichnungsmaterials ist die amorphe, elektrisch leitfähige, thermisch veränderbare Aufzeichnungsschicht (B), in welcher die Farbstoffe über ionische Bindungen an die Polymerisate gebunden sind. Erfindungsgemäß sind dabei die anionischen, d.h. negative Ladungen tragenden Farbstoffe an die kationischen, d.h. positive Ladungen tragende Polymerisate gebunden.

Hauptkriterium für die Auswahl erfindungsgemäß geeigneter anionischer Farbstoffe ist, ob ihr Absorptionsmaximum nahe bei der Wellenlänge λ des Schreiblaserstrahls liegt oder gleich dieser Wellenlänge ist. So wählt man bei der Verwendung eines Schreiblasers, welcher im sichtbaren Wellenlängenbereich emittiert, einen Farbstoff, dessen Absorptionsmaximum in eben diesen Bereich fällt, wogegen man bei der Verwendung eines Halbleiterlasers einen im IR-Bereich absorbierenden Farbstoff anwendet.

Ein weiteres Kriterium für die Auswahl geeigneter anionischer Farbstoffe ist ihre Löslichkeit in polaren flüssigen Medien. Darunter sind Lösungsmittel oder Lösungsmittelgemische zu verstehen, welche mit sich selbst und mit den darin gelösten Stoffen Dipol-Dipol-, Dipol-Ion- oder Ion-Ion-Wechselwirkungen eingehen, wie Wasser, Ethylalkohol, Acetonitril, Dioxan, N-Methylpyrrolidon, Propylencarbonat, Hexamethylphosphorsäuretriamid, Dimethylsulfoxid oder Aceton.

Gut geeignet sind anionische Farbstoffe, welche den Klassen der Azo-, der Perylen-, der Anthrachinon-, der Cyanin-, der Phthalocyanin-, der Porphin-, der Tetraazaporphin-, der Hemiporphyrazin- oder der Tetrathiolato-Metallkomplex-Farbstoffe entstammen. Hiervon sind Derivate des Phthalocyanins, des Porphins, des Tetraazaporphins, des Hemiporphyrazins oder eines Tetrathiolato-Metallkomplexes von Vorteil und Derivate des Phthalocyanins von besonderem Vorteil.

Gut geeignete anionische Farbstoffe enthalten bekannte anionische Gruppen, wobei Carboxylat-, O-Phosphat-, O-Sulfat- oder Sulfonatgruppen von Vorteil und Sulfonatgruppen von besonderem Vorteil sind.

Beispiele besonders gut geeigneter anionischer Farbstoffe sind demnach Sulfonatgruppen tragende, metallfreie oder metallhaltige Phthalocyaninderivate wie Phthalocyanin-mono- und -tetrasulfonat oder sulfonierte Chrom-, Mangan-, Eisen-, Kobalt-, Nickel-, Palladium-, Zinn-, Kupfer-, Cadmium-, Titanyl-, Vanadinyl-, Niob-, Tantal-, Chloroaluminium-, Hydroxialuminium- oder Siliciumphthalocyaninkomplexe. Diese Phthalocyaninderivate können außer der oder den Sulfonatgruppen weitere Reste wie Halogenatome oder Alkyl-, Cycloalkyl-, ω-Arylalkyl- oder Arylreste enthalten, wobei letztere auch an die Phenylkerne des Phthalocyaningrundgerüstes kata- oder peri-anelliert sein können.

Die Aufzeichnungsschichten (B) der erfindungsgemäßen Aufzeichnungsmaterialien enthalten den anionischen Farbstoff in einer Menge von 5 bis 70, vorzugsweise 10 bis 60 und insbesondere 15 bis 50 Gew.%, bezogen auf die Aufzeichnungsschicht (B).

Für den Aufbau der Aufzeichnungsschicht (B) der erfindungsgemäßen Aufzeichnungsmaterialien kommen alle elektrisch leitfähigen Polymerisate in Frage, sofern sie kationische Gruppen enthalten und aus in flüssigen polaren Medien löslichen Monomeren durch Elektrolyse hergestellt werden können.

Gut geeignet sind Polymerisate, welche Ammonium- oder Immoniumgruppen, und/oder ein positiv geladenes Bindungssystem aus mehreren konjugierten Doppelbindungen enthalten.

Beispiele besonders gut geeigneter kationischer Polymerisate sind Homopolymerisate des Pyrrols oder von N-Alkyl- oder N-Arylpyrrolen; Copolymerisate dieser Verbindungen untereinander und/oder mit Furan, Thiophen oder Thiazol; oder Homopolymerisate des Thiophens oder des Anilins; von denen Homopolypyrrol und Copolymerisate des Pyrrols besonders vorteilhaft sind. Von ganz besonderem Vorteil ist dabei Homopolypyrrol.

Diese Polymerisate werden aus den besonders gut geeigneten Monomeren Pyrrol, N-Alkyl- oder N-Arylpyrrol, Thiophen oder Anilin hergestellt, wobei insbesondere im Falle der Pyrrolmonomeren Furan, Thiophen oder Thiazol als Comonomere in Betracht kommen.

Die Aufzeichnungsschichten (B) der erfindungsgemäßen Aufzeichnungsmaterialien enthalten die ionischen Polymerisate in einer Menge von 30 bis 95, vorzugsweise 40 bis 90 und insbesondere 50 bis 85 Gew.%, bezogen auf die Aufzeichnungsschicht (B). Darüber hinaus können die Aufzeichnungsschichten (B) weitere geeignete Zusatzstoffe wie nichtionische Farbstoffe, nichtionische Polymerisate, Weichmacher, Ozonschutzmittel oder Antioxidantien enthalten.

Im allgemeinen sind die Aufzeichnungsschichten (B) 0,001 bis 1,5 µm dick.

Besonders vorteilhafte erfindungsgemäße Aufzeichnungsmaterialien weisen demnach Aufzeichnungsschichten (B) auf, in denen, bezogen auf die Schicht (B), 5 bis 70 Gew.% besonders gut geeigneter, Sulfonatgruppen tragender Phthalocyaninderivate über ionische Bindungen mit 95 bis 30 Gew.% Polypyrrol verknüpft sind.

Der weitere wesentliche Bestandteil der erfindungsgemäßen Aufzeichnungsmaterialien ist der elektrische leitfähige dimensionsstabile Träger (A). Dieser Träger (A) kann die Form eines Bandes, einer quadratischen oder rechteckigen Platte oder einer runden Scheibe haben. Von Vorteil ist die Form einer runden Scheibe (Disk).

Der Träger (A) trägt eine oder zwei der vorstehend im einzelnen beschriebenen Aufzeichnungsschichten (B). Trägt er zwei Aufzeichnungsschichten (B), so liegen diese einander gegenüber, d.h. sie liegen den beiden größten Oberflächen des Trägers (A) auf. Von Vorteil sind Träger (A), welche nur eine Aufzeichnungsschicht (B) tragen.

Der Träger (A) weist in der Oberfläche, die einer Aufzeichnungsschicht (B) zugewandt ist, Strukturen auf. Die Strukturen in der Oberfläche liegen im Mikrometer- und/oder Submikrometerbereich. Sie dienen der exakten Führung des Leselaserstrahls und gewährleisten ein rasches und genaues Ansprechen der Spurlagenservo- und Autofokussiereinrichtungen in den laseroptischen Schreib- und Leseköpfen der üblicherweise verwendeten Plattenlaufwerke, d.h. sie ermöglichen oder verbessern das "tracking". Außerdem können diese Strukturen selbst Daten sein, so wie dies beispielsweise bei den bekannten Audio- oder Video-Compact-Disks der Fall ist, oder sie können der Kodierung der eingeschriebenen Daten dienen. Die Strukturen bestehen aus erhabenen Teilen und/oder aus Vertiefungen. Diese liegen in der Form von durchgehenden konzentrischen oder spiralförmigen Spurrillen oder als isolierte Hügel und/oder Löcher vor. Außerdem kann die Struktur eine mehr oder weniger glatte Wellenform haben. Den Spurrillen wird hierbei der Vorzug gegeben. Sie weisen in ihrer Querrichtung eine rechteckige sägezahnartige, eine V-förmige oder eine trapezartige Kontur auf. Ihre Vertiefungen werden im allgemeinen als "grooves" und ihre erhabenen Teile als "land" bezeichnet. Von besonderem Vorteil sind Spurrillen mit 50 bis 200 nm tiefen und 0,4 bis 0,8 µm breiten "grooves", zwischen denen jeweils ein 1 bis 3 µm breites "land" liegt.

Die Strukturen werden in üblicher und bekannter Weise bei der Herstellung der Träger (A) durch formgebende Bearbeitungsmethoden wie Spritzgießen erzeugt.

Der Träger (A), welcher eine oder zwei Strukturiate Oberflächen aufweist, besteht aus einem Kunststoff.

Besonders gut geeignete Träger (A) bestehen aus Polymethylmethacrylat, Polycarbonat, Polymethylpenten, Styrol/Acrylnitril-Copolymerisat oder einem Gemisch aus Polystyrol und Poly(2,6-dimethyl-phen-1,4-ylen-ether).

Die strukturierten Oberflächen der Träger (A) sind mit einer 20 bis 100 nm, insbesondere 40 bis 80 nm dicken Schicht aus Ru, Rh, Pd, Ag, Re, Os, Ir, Pt, Au, Ni und/oder Cu bedeckt. Hierbei ist eine Schicht aus Au von besonderem Vorteil.

Die Schicht, welche eine struktierte Oberfläche des Trägers (A) bedeckt, dient bei der Herstellung der Aufzeichnungsschicht (B) als Anode und im fertigen erfindungsgemäßen Aufzeichnungsmaterial ggf. als Reflektionsschicht. Sie wird nach den üblichen und bekannten Methoden der Erzeugung dünner Metallschichten hergestellt.

Ganz besonders vorteilhafte, erfindungsgemäße, flächenförmige, laseroptische Aufzeichnungsmaterialien bestehen aus
(A) einer runden Scheibe
   (a₁) aus Polymethylmethacrylat, Polycarbonat, Polymethylpenten, Styrol/Acrylnitril-Copolymerisat oder aus einem Gemisch aus Polystyrol und Poly(2,6-dimethyl-phen-1,4-ylen-ether) mit
   (a₂) einer Spurrillen aufweisenden Oberfläche, welche
   (a₃) von einer 40 bis 80 nm dicken Au-Schicht bedeckt ist,
   und
(B) einer Aufzeichnungsschicht aus
   (b₁) 40 bis 90 Gew.%, insbesondere 50 bis 85 Gew.%, bezogen auf (B), an Homopolypyrrol und
   (b₂) 10 bis 60 Gew.%, insbesondere 15 bis 50 Gew.%, bezogen auf (B), Phthalocyaninen, welche eine oder mehrere Sulfonatgruppen tragen.

Darüber hinaus können die erfindungsgemäßen Aufzeichnungsmaterialien weitere Schichten wie z.B. Schutzschichten aufweisen.

Erfindungsgemäß werden die Aufzeichnungsschichten (B) direkt elektrochemisch auf den Trägern (A) bzw. auf den darauf aufliegenden Metallschichten erzeugt.

Hierzu verwendet man Lösungen der besonders gut geeigneten Monomeren in polaren flüssigen Medien, welche die vorstehend genannten anionischen Farbstoffe als die alleinigen Leitsalze enthalten. Diese Lösungen werden einer Gleichstromelektrolyse unter galvanostatischen Bedingungen unterzogen, wodurch man auf der Anode,d.h., auf den vorstehend genannten Metallschichten, durch anodische Oxidation aus den Monomeren einen elektrisch leitfähigen Polymerisatfilm erzeugt, welcher die Anionen der Farbstoffe enthält.

Die ganz besonders vorteilhaften erfindungsgemäßen Aufzeichnungsmaterialien erhält man durch anodische Oxidation von elektrisch leitfähigen Lösungen, welche als Monomere Pyrrol und als Leitsalze Natriumsalze von Sulfonatgruppen enthaltenden Phthalocyaninen aufweisen. Hierbei ist die Verwendung polarer flüssiger Medien, welche Wasser enthalten, von besonderem Vorteil.

Die erfindungsgemäßen Aufzeichnungsmaterialien werden mittels eines Schreiblaserstrahls mit analogen oder digitalen Daten beschrieben, wobei man zum Einschreiben analoger Daten bekanntermaßen einen Dauerstrichlaser und zum Einschreiben digitaler Daten einen impulskodierten Laser verwendet.

Im allgemeinen weisen geeignete Laser bei der Schreibwellenlänge λ eine Strahlleistung von 1 bis 20 mWatt auf. Der Fokusdurchmesser des Schreiblaserstrahls liegt im allgemeinen bei 200 bis 2000 nm. Im allgemeinen beträgt die Impulsdauer bei der Bestrahlung mit einem impulskodierten Laser 10 bis 1000 ns. Vorteilhafterweise verwendet man zum Einschreiben einen Laserstrahl von Licht der Wellenlänge λ, welches von der betreffenden Aufzeichnungsschicht gut absorbiert wird. Vorteilhaft sind Wellenlängen λ von 400 bis 1000 nm, insbesondere 600 bis 900 nm.

Beim Schreibvorgang wird der Schreiblaserstrahl in relativer Bewegung über das Aufzeichnungsmaterial hinweggeführt. Dabei trifft er senkrecht auf das Aufzeichnungsmaterial auf oder er ist auf dessen Aufzeichnungsschicht (B) fokussiert.An der Auftreffstelle wird die Aufzeichnungsschicht (B) lokal erhitzt und es entstehen thermisch veränderte Bereiche, beispielsweise in der Form von Löchern, Kratern oder Flecken. Beim Einschreiben von Daten mit impulskodierten Lasern haben diese Bereiche im wesentlichen eine runde oder ovale Form (spots), beim Einschreiben mit einem Dauerstrichlaser können sie beliebige Formen haben.

Die eingeschriebenen Daten werden mit Hilfe eines Leselaserstrahls gelesen. Die Strahlleistung des Lasers bei der Lesewellenlänge λʹ liegt unterhalb der Schwellenleistung, ab der ein Beschreiben möglich wird. Im allgemeinen liegt die Strahlleistung bei 0,01 bis 3 mWatt. Vorteilhafterweise verwendet man Laserlicht der Wellenlänge λʹ, welches von der Aufzeichnungsschicht gut absorbiert wird, oder solches der Wellenlänge λʹ, welches nur schlecht oder gar nicht absorbiert wird. Vorteilhaft sind Wellenlängen λʹ von 400 bis 1000 nm, insbesondere 600 bis 900 nm.

Auch beim Lesevorgang wird der Leselaserstrahl in relativer Bewegung über das Aufzeichnungsmaterial hinweggeführt. Dabei trifft er senkrecht auf das Aufzeichnungsmateral auf oder er ist auf dessen Aufzeichnungsschicht (B) fokussiert.

Trifft der Leselaserstrahl beim Überstreichen der Aufzeichnungsschicht (B) auf einen thermisch veränderten Bereich, beispielsweise einen Fleck, so ändern sich die Eigenschaften des vom Aufzeichnungsmaterial transmittierten oder reflektierten Lichts, was mit Hilfe geeigneter Detektoren nachgewiesen werden kann.

Hierbei ist es von ganz besonderem Vorteil, Schreib- und Leselaser zu verwenden, welche Laserstrahlung im Wellenlängenbereich von 600 bis 900 nm ausstrahlen. Dabei ist es außerdem von ganz besonderem Vorteil, wenn die Schreibwellenlänge λ mit der Lesewellenlänge λʹ identisch ist oder sich nur minimal von ihr unterscheidet. Licht dieser Wellenlänge wird beispielsweise von üblichen und bekannten HeNe-Lasern oder von Halbleiterlasern geliefert.

Für das laseroptische Schreiben und Lesen von Daten können die üblichen und bekannten laseroptischen Plattenlaufwerke verwendet werden, deren Aufbau und Fuktionsweise allgemein bekannt sind.

Die erfindungsgemäßen Aufzeichnungsmaterialien weisen zahlreiche besondere Vorteile auf. So ist ihre unbeschriebene Aufzeichnungsschicht (B) besonders stabil, so daß sie sich selbst nach langer Lagerzeit bei vergleichsweise hoher Temperatur und Luftfeuchtigkeit noch immer hervorragend für die laseroptische Datenaufzeichnung eignet. Gleiches gilt für die beschriebene Aufzeichnungsschicht (B); hier tritt selbst bei sehr langer Lagerung kein Informationsverlust ein. Darüber hinaus können die Aufzeichnungsschichten (B) in besonders vorteilhafter Weise elektrochemisch erzeugt werden, wodurch die Bildung von Rissen und Löchern vermieden wird und die Dicke und die Zusammensetzung der Schichten exakt eingestellt und reproduziert werden kann. Diese besonderen Vorteile stellen sich ein, obwohl die Oberflächen, auf welchen die Aufzeichnungsschichten (B) abgeschieden werden, strukturiert sind. An und für sich war zu erwarten gewesen, daß sich hierdurch Nachteile ergeben. Aufgrund ihrer elektrischen Leitfähigkeit eröffnen die Aufzeichnungsschichten (B) neue Möglichkeiten der Anwendung und Weiterverarbeitung. So können auf ihnen beispielsweise weitere Schichten gleichfalls elektrochemisch aufgebracht werden. Desweiteren wird bei den erfindungsgemäßen Aufzeichnungsmaterialien eine Bitdichte von über 10⁶ bis 10⁸ Bits pro cm² und ein konstant hohes Signal-Rausch-Verhältnis erreicht, wobei die Daten dann auch noch unmittelbar nach dem Einschreiben gelesen werden können. Überdies weisen die erfindungsgemäßen Aufzeichnungsmaterialien ein vorzügliches "tracking"-Verhalten auf. Die erfindungsgemäßen Aufzeichnungsmaterialien eignen sich daher insbesondere hervorragend für Archivzwecke.

### Beispiel

### Herstellung, Eigenschaften und Verwendung erfindungsgemäßer Aufzeichnungsmaterialien

Zur Herstellung von Aufzeichnungsschichten (B) wurde eine Lösung aus, bezogen auf die Lösung, 98,9 Gew.% Wasser, 1 Gew.% Pyrrol und 0,1 Gew.% eines Phthalocyaninmetallkomplexes der Zusammensetzung Phthalocyanin·(SO₃Na)_{2,8}·Kupfer verwendet.

In diese Lösung tauchte man zehn 13 cm durchmessende und Spurrillen aufweisende Scheiben aus Polycarbonat, welche auf einer Seite mit einer 50 nm dicken Schicht aus Gold überzogen waren (Träger A). Die Metallschicht diente als Anode bei der Elektrolyse und als Reflektorschicht in den fertigen Aufzeichnungsmaterialien. Die Aufzeichnungsschichten (B) wurden galvanostatisch bei einer Stromstärke von 2 mA pro cm² während 1 Minute auf den Metallschichten der Träger erzeugt und anschließend getrocknet.

Der Farbstoffgehalt der Aufzeichnungsschichten (B) wurde aus dem durch chemische Analyse ermittelten Gehalt an Kupfer und Schwefel zu 31 Gew.%, bezogen auf die Schicht, errechnet. Der Brechungsindex der Schichten wurde ellipsometrisch mit Hilfe eines HeNe-Lasers bei einer Wellenlänge von λ = 632 nm zu 1,4 bis 1,6 bestimmt. Das Absorptionsmaximum der Schichten lag bei 600 bis 700 nm, ihr Extinktionskoeffizient K betrug 0,6 bis 0,8. Alle Schichten waren trotz der Spurrillen durchgehend 0,8 µm dick und wiesen eine Leitfähigkeit von mehr als 10⁻¹ S/cm auf. Bei der mikroskopischen Betrachtung wurden keine Kristallite, Löcher oder Risse festgestellt.

Fünf der Aufzeichnungsmaterialien wurden 30 Tage lang bei 60°C und einer relativen Luftfeuchtigkeit von 90 % gelagert. Dabei traten keine nachteiligen Veränderungen in den Aufzeichnungsschichten auf.

Die übrigen fünf Aufzeichnungsmaterialien wurden unmittelbar nach ihrer Herstellung mit Hilfe eines üblichen und bekannten laseroptischen Schreib- und Lesegerätes (Plattenlaufwerk) mit digitalen Daten in Form von Löchern beschrieben. Hierbei verwendete man einen HeNe-Laser, welcher Laserlicht einer Wellenlänge λ = 630 nm und einer Lichtleistung von 15 mWatt ausstrahlte. Die Impulsdauer des Lasers lag bei 700 ns. Das Beschreiben erfolgte von der Seite der Aufzeichnungsschichten her. Die in dieser Weise erhaltenen leicht ovalen Löcher in den Aufzeichnungsschichten wiesen alle einen größten Durchmesser von etwa 1,5 µm auf.

Diese Aufzeichnungsmaterialien wurden unmittelbar nach dem Beschreiben mit dem in seiner Leistung gedrosselten HeNe-Laser (Wellenlänge λʹ = 632 nm, Lichtleistung = 2 mWatt) gelesen. Dabei wurde das von den Aufzeichnungsmaterialien reflektierte Licht erfaßt. Es wurde festgestellt, daß Daten praktisch fehlerfrei eingeschrieben worden waren; die Fehlerrate lag unter 1 Fehler pro 10⁵ Bits. Die von den Aufzeichnungsschichten reflektierten Lichtsignale waren sehr stark und nicht verzerrt.

Diese fünf Aufzeichnungsmaterialien wurden 30 Tage lang bei 60°C und einer relativen Luftfeuchtigkeit von 90 % gelagert und anschließend erneut gelesen. Dabei waren keine Veränderungen festzustellen.

Das Beschreiben und Lesen wurde mit den nach ihrer Herstellung gelagerten fünf Aufzeichnungsmaterialien wiederholt. Dabei zeigte es sich, daß die Lagerung keinerlei nachteilige Veränderungen hervorgerufen hatte; die gelagerten Aufzeichnungsmaterialien lieferten ebenso gute Ergebnisse wie die unmittelbar nach ihrer Herstellung beschriebenen.

### Beispiele 2 und 3

### Herstellung, Eigenschaften und Verwendung erfindungsgemäßer Aufzeichnungsmaterialien

Beispiel 1 wurde wiederholt, nur daß anstelle der Goldschicht eine Schicht aus Platin (Beispiel 2) und eine Schicht aus Nickel (Beispiel 3) verwendet wurden.

In beiden Fällen wurden Ergebnisse erhalten, die mit denjenigen aus Beispiel 1 in vollem Umfang vergleichbar waren.

## Patentansprüche

1. Flächenförmiges, laseroptisches, Aufzeichnungsmaterial mit
(A) einem elektrisch leitfähigen, dimensionsstabilen Träger und mit
(B) einer oder mit zwei einander gegenüberliegenden amorphen, elektrisch leitfähigen, thermisch veränderbaren Aufzeichnungsschicht(en) mit einem durch Elektrolyse herstellbaren kationischen Polymerisat als einer wesentlichen Komponente,
dadurch gekennzeichnet, daß der elektrisch leitfähige,
dimensionsstabile Träger (A)
(a₁) ein Band, eine quadratische oder rechteckige Platte oder eine runde Scheibe aus Kunststoff darstellt und
(a₂) in der Oberfläche, die einer Aufzeichnungsschicht (B) zugewandt ist, Strukturen aufweist, wobei
(a₃) diese Oberfläche zusätzlich mit einer 20 bis 100 nm dicken Schicht aus Ru, Rh, Pd, Ag, Re, Os, Ir, Pt, Au, Ni und/oder Cu bedeckt ist,
und daß die amorphe, elektrisch leitfähige, thermisch veränderbare Aufzeichnungsschicht (B) oder eine jede der beiden Aufzeichnungsschichten (B)
(b₁) 30 bis 95 Gew.%, bezogen auf (B), eines Homopolymerisats von Pyrrol, N-Alkylpyrrol, N-Arylpyrrol, Thiophen oder von Anilin, eines Copolymerisats von mindestens zwei dieser Monomeren oder eines Copolymerisats von mindestens einem dieser Monomeren mit Furan und/oder Thiazol und
(b2) 5 bis 70 Gew.%, bezogen auf (B), mindestens eines anionischen Farbstoffs aus den Klassen der Azo-, der Perylen-, der Anthachinon-, der Cyanin-, der Phthalocyanin-, der Porphin-, der Tetraazaporphin-, der Hemiporphyrazin- und/oder der Tetrathiolato-Metallkomplex-Farbstoffe
enthält.

2. Flächenförmiges, laseroptisches Aufzeichnungsmaterial nach Anspruch 1, dadurch gekennzeichnet, daß der elektrisch leitfähige,
dimensionsstabile Träger (A)
(a₁) eine runde Scheibe aus Polymethylmethacrylat, Polycarbonat, Polymethylpenten, Styrol/Acrylnitril-Copolymerisat oder einem Gemisch aus Polystyrol und Poly(2,6-dimethyl-phen-1,4-ylen-ether) darstellt
und daß die amorphe, elektrisch leitfähige, thermisch veränderbare Aufzeichnungsschicht (B)
(b₁) 40 bis 90 Gew.%, bezogen auf (B), des Homopolymerisats von Pyrrol und
(b₂) 10 bis 60 Gew.%, bezogen auf (B), an Sulfonatgruppen tragenden Phthalocyaninen enthält.

3. Flächenförmiges, laseroptisches Aufzeichnungsmaterial nach Anspruch 1 oder 2, dadurch gekennzeichnet, daß die amorphe, elektrisch leitfähige, thermisch veränderbare Aufzeichnungsschicht (B) 0,001 bis 1,5 µm dick ist.

4. Flächenförmiges, laseroptisches Aufzeichnungsmaterial nach einem der Ansprüche 1, 2 oder 3, dadurch gekennzeichnet, daß
(a₃) die Oberfläche des elektrisch leitfähigen, dimensionsstabilen Trägers, die einer Aufzeichnungsschicht (B) zugewandt ist, mit einer 40 bis 80 nm dicken Schicht aus Au bedeckt ist.

5. Verfahren zur Herstellung eines flächenförmigen, laseroptischen Aufzeichnungsmaterials mit
(A) einem elektrisch leitfähigen, dimensionsstabilen Träger und mit
(B) einer oder mit zwei einander gegenüberliegenden amorphen, thermisch veränderbaren Aufzeichnungsschicht mit einem Homopolymerisat von Pyrrol, N-Alkylpyrrol, N-Arylpyrrol, Thiophen oder von Anilin, einem Copolymerisat von mindestens zwei dieser Monomeren oder einem Copolymerisat von mindestens einem dieser Monomeren mit Furan und/oder Thiazol als einer der wesentlichen Komponenten
durch elektrolytisches Abscheiden der Polymerisate auf dem Träger (A) aus einem die betreffenden Monomere und mindestens ein Leitsalz enthaltenden Elektrolyten, dadurch gekennzeichnet, daß man hierbei einen elektrisch leitfähigen, dimensionsstabilen Träger (A) verwendet, welcher
(a₁) ein Band, eine quadratische oder rechteckige Platte oder eine runde Scheibe aus Kunststoff darstellt und
(a₂) in der Oberfläche, die einer abzuscheidenden Aufzeichnungsschicht (B) zugewandt ist, Strukturen aufweist, wobei
(a₃) diese Oberfläche, die einer abzuscheidenden Aufzeichnungsschicht (B) zugewandt ist, mit einer 20 bis 100 nm dicken Schicht aus Ru, Rh, Pd, Ag, Re, Os, Ir, Pt, Au, Ni und/oder Cu bedeckt ist,
und daß man hierbei als Leitsalz mindestens einen anionischen Farbstoff aus den Klassen der Azo-, der Perylen-, der Anthrachinon-, der Cyanin-, der Phthalocyanin-, der Porphin-, der Tetraazaporphin-, der Hemiporphyrazin- und/oder der Tetrathiolato-Metallkomplex-Farbstoff verwendet.

6. Verfahren zur Herstellung eines flächenförmigen, laseroptischen Aufzeichnungsmaterials nach Anspruch 5, dadurch gekennzeichnet, daß man hierbei einen elektrisch leitfähigen, dimensionsstabilen Träger (A) verwendet, welcher
(a₁) eine runde Scheibe aus Polymethylmethacrylat, Polycarbonat, Polymethylpenten, Styrol/Acrylnitril-Copolymerisat oder aus einem Gemisch aus Polystyrol und Poly(2,6-dimethyl-phen-1,4-ylen-ether) darstellt, wobei
(a₃) die Oberfläche, die einer abzuscheidenden Aufzeichnungsschicht (B) zugewandt ist, mit einer 40 bis 80 nm dicken Schicht aus Au bedeckt ist
und daß man hierbei als Monomer Pyrrol und als Leitsalz mindestens ein Sulfonatgruppen tragendes Phthalocyanin verwendet.

7. Verfahren zum laseroptischen Schreiben und Lesen von Daten, bei dem die thermisch veränderbare, Farbstoffe und Polymerisate enthaltende, amorphe Aufzeichnungsschicht eines flächenförmigen, laseroptischen Aufzeichnungsmaterials mittels eines Schreiblaserstrahls mit analogen oder digitalen Daten in Form von thermisch veränderten Bereichen beschrieben wird, wonach die eingeschriebenen Daten mittels eines Leselaserstrahls gelesen werden, wobei man das von dem Aufzeichnungsmaterial transmittierte oder reflektierte Licht analysiert, dadurch gekennzeichnet, daß man hierzu ein flächenförmiges, laseroptisches Aufzeichnungsmaterial gemäß den Ansprüchen 1 bis 4 verwendet.

8. Verfahren nach Anspruch 7, dadurch gekennzeichnet, daß man hierzu ein Aufzeichnungsmaterial gemäß Anspruch 1 verwendet, dessen Aufzeichnungsschicht (B) gemäß Anspruch 5 hergestellt worden ist.

## Claims

1. A planar, laser-optical recording material comprising
(A) an electrically conductive, dimensionally stable support layer and
(B) one or two mutually opposite amorphous, electrically conductive, thermally alterable recording layer(s) comprising a cationic polymer that is preparable by electrolysis as one of the essential components,
wherein the electrically conductive, dimensionally stable support layer (A)
(a₁) represents a tape, a square or rectangular plate or a round disk of plastic and
(a₂) has structures in the surface that faces a recording layer (B),
(a₃) which surface has additionally been covered with a layer from 20 to 100 nm in thickness of Ru, Rh, Pd, Ag, Re, Os, Ir, Pt, Au, Ni and/or Cu,
and wherein the amorphous, electrically conductive, thermally alterable recording layer (B) or each of the two recording layers (B) contains
(b₁) from 30 to 95% by weight, based on (B), of a homopolymer of pyrrole, N-alkylpyrrole, N-arylpyrrole, thiophene or aniline, of a copolymer of two or more of the said monomers, of a copolymer of one or more of the said monomers with furan and/or thiazole, and
(b₂) from 5 to 70% by weight, based on (B), of one or more anionic dyes selected from the group consisting of azo, perylene, anthraquinone, cyanine, phthalocyanine, porphine, tetraazaporphine, hemiporphyrazine and/or tetrathiolato metal complex dyes.

2. A planar, laser-optical recording material as claimed in claim 1, wherein the electrically conductive, dimensionally stable support layer (A) is
(a₁) a disk made from polymethylmethacrylate, polycarbonate, polymethylpentene or a styrene/acrylonitrile copolymer or from a mixture consisting of polystyrene and poly(2,6-dimethyl-1,4-phenylene ether),
and wherein the amorphous, electrically conductive, thermally alterable recording layer (B) contains
(b₁) from 40 to 90% by weight, based on (B), of the homopolymer of pyrrole and
(b₂) from 10 to 60% by weight, based on (B), of a phthalocyanine carrying sulfonate groups.

3. A planar, laser-optical recording material as claimed in claim 1 or 2, wherein the amorphous, electrically conductive, thermally alterable recording layer (B) is of a thickness from 0.001 to 1.5 µm.

4. A planar, laser-optical recording material as claimed in any of claims 1, 2 or 3 wherein
(a₃) the surface of the electrically conductive, dimensionally stable support layer that faces a recording layer (B) is covered by a layer having a thickness from 40 to 80 nm and made from Au.

5. A method for preparing a planar, laser-optical recording material comprising
(A) an electrically conductive, dimensionally stable support layer and
(B) one or two mutually opposite amorphous, thermally alterable recording layers comprising a homopolymer of pyrrole, N-alkylpyrrole, N-arylpyrrole, thiophene or of aniline, a copolymer of at least two of these monomers or a copolymer of at least one of these monomers with furan and/or thiazole as one of the essential components
by electrolytic precipitation of the polymers onto the support layer (A) from an electrolyte containing the monomers in question and at least one conducting salt, which comprises using an electrically conductive, dimensionally stable support layer (A) which
(a₁) represents a tape, a square or rectangular plate or a round disk of plastic and
(a₂) has structures in the surface that faces a recording layer (B),
(a₃) which surface has been covered with a layer from 20 to 100 nm in thickness of Ru, Rh, Pd, Ag, Re, Os, Ir, Pt, Au, Ni and/or Cu,
and using as conducting salt at least one anionic dye from the classes of the azo, perylene, anthraquinone, cyanine, phthalocyanine, porphine, tetraazaporphine, hemiporphyrazine and/or tetrathiolato metal complex dyes.

6. A method for preparing a planar, laser-optical recording material as claimed in claim 5, wherein the electrically conductive, dimensionally stable support layer (A) used comprises
(a₁) a round disk of polymethylmethacrylate, polycarbonate, polymethylpentene, styrene/acrylonitrile copolymer or of a mixture of polystyrene and poly(2,6-dimethyl-1,4-phenylene ether), and
(a₃) the surface that faces recording layer (B) to be deposited has been covered with a layer of Au from 40 to 80 nm in thickness,
and wherein the monomer used is pyrrole and the conducting salt used comprises at least one phthalocyanine carrying sulfonate groups.

7. A method for the laser-optical writing and reading of data in which the thermally alterable, dye- and polymer-containing amorphous recording layer of a planar, laser-optical recording material has written to it analog or digital data in the form of thermally altered regions by means of a write laser beam, whereupon the written data are read by means of a read laser beam, and the light transmitted or reflected by the recording material is analyzed, which comprises using a planar, laser-optical recording material as claimed in any of claims 1 to 4.

8. A method as claimed in claim 7, wherein there is used a recording material as claimed in claim 1 whose recording layer (B) has been prepared as claimed in claim 5.

## Revendications

1. Support d'enregistrement optique laser plat comportant
(A) un substrat conducteur de l'électricité de dimensions stables et
(B) une couche d'enregistrement amorphe conductrice de l'électricité modifiable thermiquement ou deux telles couches opposées ayant, comme un de ses, ou de leurs, constituants essentiels, un polymère cationique pouvant être produit par électrolyse,
caractérisé par le fait que le substrat conducteur de dimensions stables (A)
(a₁) constitue une bande, une plaque carrée ou rectangulaire ou un disque en matière plastique et
(a₂) présente des structures dans sa surface tournée vers une couche d'enregistrement (B),
(a₃) cette surface étant en plus recouverte d'une couche de Ru, Rh, Pd, Ag, Re, Os, Ir, Pt, Au, Ni et/ou Cu de 20 à 100 nm d'épaisseur,
et que la couche d'enregistrement amorphe conductrice modifiable thermiquement (B) ou chacune des deux couches d'enregistrement (B) contient
(b₁) 30 à 95 % en poids, relativement à (B), d'un homopolymère de pyrrole, N-alkylpyrrole, N-arylpyrrole, thiophène ou d'aniline, d'un copolymère d'au moins deux de ces monomères ou d'un copolymère d'au moins un de ces monomères avec le furanne et/ou le thiazole et
(b₂) 5 à 70 % en poids, relativement à (B), d'au moins un colorant anionique des familles des colorants azoïques, des colorants péryléniques, des colorants anthraquinoniques, des colorants de cyanines, des colorants de phtalocyanines, des colorants de porphine, des colorants de tétraazaporphine, des colorants d'hémiporphyrazine et/ou des colorants complexes tétrathiolato métal.

2. Support d'enregistrement optique laser plat selon la revendication 1, caractérisé par le fait que le substrat conducteur de dimensions stables (A)
(a₁) constitue un disque en polyméthacrylate de méthyle, polycarbonate, polyméthylpentène, copolymère styrène/acrylonitrile ou un mélange de polystyrène et de poly(2,6-diméthyl-phén-1,4-ylène éther)
et que la couche d'enregistrement amorphe conductrice modifiable thermiquement (B) contient
(b₁) 40 à 90 % en poids, relativement à (B), de l'homopolymère de pyrrole et
(B₂) 10 à 60 % en poids, relativement à (B), de phtalocyanines portant des groupes sulfonates.

3. Support d'enregistrement optique laser plat selon l'une des revendications 1 et 2, caractérisé par le fait que la couche d'enregistrement amorphe conductrice modifiable thermiquement (B) a une épaisseur de 0,001 à 1,5 µm.

4. Support d'enregistrement optique laser plat selon l'une des revendications 1, 2 et 3, caractérisé par le fait que
(a₃) la surface du substrat conducteur de dimensions stables tournée vers une couche d'enregistrement (B) est recouverte d'une couche d'or de 40 à 80 nm d'épaisseur.

5. Procédé de fabrication d'un support d'enregistrement optique laser plat comportant
(A) un substrat conducteur de dimensions stables et
(B) une couche d'enregistrement amorphe modifiable thermiquement ou deux telles couches opposées ayant, comme un de ses, ou de leurs, constituants essentiels, un homopolymère de pyrrole, N-alkylpyrrole, N-arylpyrrole, thiophène ou d'aniline, un copolymère d'au moins deux de ces monomères ou un copolymère d'au moins un de ces monomères avec le furanne et/ou le thiazole,
par dépôt électrolytique des polymères sur le substrat
(A) à partir d'un électrolyte contenant les monomères considérés et au moins un sel conducteur, caractérisé par le fait qu'on y utilise un substrat conducteur de dimensions stables (A) qui
(a₁) constitue une bande, une plaque carrée ou rectangulaire ou un disque en matière plastique et
(a₂) présente des structures dans sa surface tournée vers une couche d'enregistrement à déposer (B),
(a₃) cette surface tournée vers une couche d'enregistrement à déposer (B) étant recouverte d'une couche de Ru, Rh, Pd, Ag, Re, Os, Ir, Pt, Au, Ni et/ou Cu de 20 à 100 nm d'épaisseur,
et qu'on y utilise comme sel conducteur au moins un colorant anionique des familles des colorants azoïques, des colorants péryléniques, des colorants anthraquinoniques, des colorants de cyanines, des colorants de phtalocyanines, des colorants de porphine, des colorants de tétraazaporphine, des colorants d'hémiporphyrazine et/ou des colorants complexes tétrathiolato métal.

6. Procédé de fabrication d'un support d'enregistrement optique laser plat selon la revendication 5, caractérisé par le fait qu'on utilise un substrat conducteur de dimensions stables (A) qui
(a₁) constitue un disque en polyméthacrylate de méthyle, polycarbonate, polyméthylpentène, copolymère styrène/acrylonitrile ou un mélange de polystyrène et de poly(2,6-diméthyl-phèn-1,4-ylène éther),
(a₃) la surface tournée vers une couche d'enregistrement à déposer (B) étant recouverte d'une couche d'or de 40 à 80 nm d'épaisseur,
et qu'on y utilise comme monomère le pyrrole et comme sel conducteur au moins une phtalocyanine portant des groupes sulfonates.

7. Procédé d'écriture et de lecture optiques laser de données dans lequel on écrit, au moyen d'un faisceau laser d'écriture, des données analogiques ou numériques sous forme de zones modifiées thermiquement sur la couche d'enregistrement amorphe modifiable thermiquement contenant des colorants et des polymères d'un support d'enregistrement optique laser plat, après quoi on lit les données écrites au moyen d'un faisceau laser de lecture en analysant la lumière transmise ou réfléchie par le support d'enregistrement, caractérisé par le fait qu'on utilise pour cela un support d'enregistrement optique laser plat selon les revendications 1 à 4.

8. Procédé selon la revendication 7, caractérisé par le fait qu'on utilise pour cela un support d'enregistrement selon la revendication 1 dont la couche d'enregistrement (B) a été produite selon la revendication 5.
